# EUROPEAN PATENT APPLICATION

(11) **EP 1 112 691 A1**
(43) Date of publication of application: **04.07.2001**
(21) Application number: 00203554.1
(22) Date of filing: 12.10.2000
(51) Int. Cl.: A22C 11/10

(54) **Feeding, seperation and cutting device for machine for the production of sausages with twisted casing**

(30) Priority: 31.12.1999 IT MI992759
(71) Applicant: Righele, Giovanni Battista, 36010 Zane' (Vicenza) (IT)
(72) Inventor: Righele, Giovanni Battista, 36010 Zane' (Vicenza) (IT)
(74) Representative: Mittler, Enrico

(57) **Abstract**

The feeding, separation and cutting device according to the present invention comprises means (6, 7) for the feed of a continuous sausage (4) that are provided with at least one pair of cooperating pincers (13, 14, 14') that are arranged on opposite sides of the sausage and approachable to each other so as to squeeze the sausage and thus form a short connection link (15) between each sausage (16) downstream and the rest of the sausage (4) upstream in the direction for the feeding of the sausage. At least one first pincer (13) of said pair of pincers (13, 14, 14') comprises a cutting blade (20) that is controlled so as to move from a rest position to a cutting position when said pincers (13, 14, 14') are in position near to each other for the formation of said connection link (15).

## Description

The present invention concerns a feeding, separation and cutting device for machine for the production of sausages with twisted casing.

There are known machines for the production of sausages with twisted casing, in which a filling machine introduces a constant and continuous, natural or synthetic, flow of minced meat into a stuffing tube onto which a tubular flexible envelope (the so-called "casing"), is placed in gathered condition. In this way a continuous sausage is formed that is then transformed into a continuous string of single sausages by periodically squeezing the continuous sausage and at the same time twisting the tubular envelope.

A feeding and separation device located at the exit of the filling machine and comprising sausage feeding means provided with pairs of cooperating pincers that are arranged on opposite sides of the sausage and that can be brought near to each other in order to squeeze the sausage and thus form a short connection link between each sausage downstream and the rest of the sausage upstream in the direction of the feeding of the sausage provide to the transformation of the continuous sausage into a string of sausages. Suitable control means cause the rotation of the stuffing tube for the twisting of the casing around the link thus formed.

One of these machines is described in EP-A-0868852 and provides that the means for controlling the rotation of the stuffing tube are synchronised with the movement of the pincers in such a way that the stuffing tube rotates only in the interval of time between one squeezing of the casing and the next one. The casing is thus stressed in minor way and trouble some breaks in the casing, that otherwise would be possible in the case of use of natural casing, are prevented.

For the great distribution there is the additional need to have, instead of the common strings, single sausages packaged in containers that facilitate their sale and that offer greater health and preservation guarantees.

Object of the present invention is to realize a feeding and separation device for machine for the production of sausages with twisted casing, that provides also the cutting of the connection links between a sausage and the next one in order to allow the obtainment of single sausages separated from each other.

According to the invention such object is reached with a feeding, separation and cutting device comprising sausage feeding means that is provided with at least one pair of cooperating pincers that are arranged on opposite sides of the sausage and that are approachable to each other so as to squeeze the casing and thus form a short connection link between each sausage downstream and the rest of the sausage upstream in the direction of the feeding of the sausage, characterized in that at least one first pincer of said pair of pincers comprise a cutting blade that is controlled so as to move from a rest position to a cutting position when said pincers are in position near to each other for the formation of said connection link.

In this way, after the two near pincers have formed the link, the cutting blade that is associated with at least one of the two pincers effects the cutting of the same link for the complete separation of the just formed piece of sausage from the rest of the sausage.

The displacement of the cutting blade can be controlled in various ways, for example through an adequately shaped cam that is inserted in the path of an appropriate appendix of the same blade.

These and other characteristics of the present invention will be made evident by the following detailed description of an embodiment thereof that is illustrated as a non-limiting example in the enclosed drawings, in which:
Figure 1 shows in perspective view a device according to the invention that is placed at the exit of a filling machine;
Figures 2 and 3 show the aforesaid device in two subsequent operational stages in a top plan;
Figures 4 and 5 show the same device in longitudinal median view in the same operational stages;
Figures 6 and 7 show said device in cross section, respectively according to lines VI-VI of Fig. 2 and VII-VII of Fig. 3;
Figure 8 shows in front view a pair of pincers of the aforesaid device in position of squeezing of the continuous sausage for the formation of a connection link between an already formed sausage and the rest of the sausage;
Figure 9 shows said pair of pincers in section according to line IX-IX of Fig. 8;
Figures 10, 11 and 12 respectively show front, in top plan and perspective views of the two pincers apart from each other;
Figure 13 shows in top plan a variation of the device illustrated in the previous figures;
Figures 14 and 15 show cross sections of the aforesaid variation similar to the ones of Figures 6 and 7.
Figure 16 shows in perspective view another variation of the device according to the invention;
Figure 17 shows the device in Fig. 16 in top plan at an operational stage similar to the one in Figure 2;
Figures 18 and 19 show the device of figure 16 in longitudinal median view in operational stages similar to those of Figures 4 and 5;
Figure 20 shows in front view a pair of pincers of the device in Figure 16 in position of formation and subsequent cutting of a connection link between an already formed sausage and the rest of the sausage;
Figures 21, 22 and 23 respectively show front, top plan and perspective views of the two pincers in Figure 20, apart from each other.

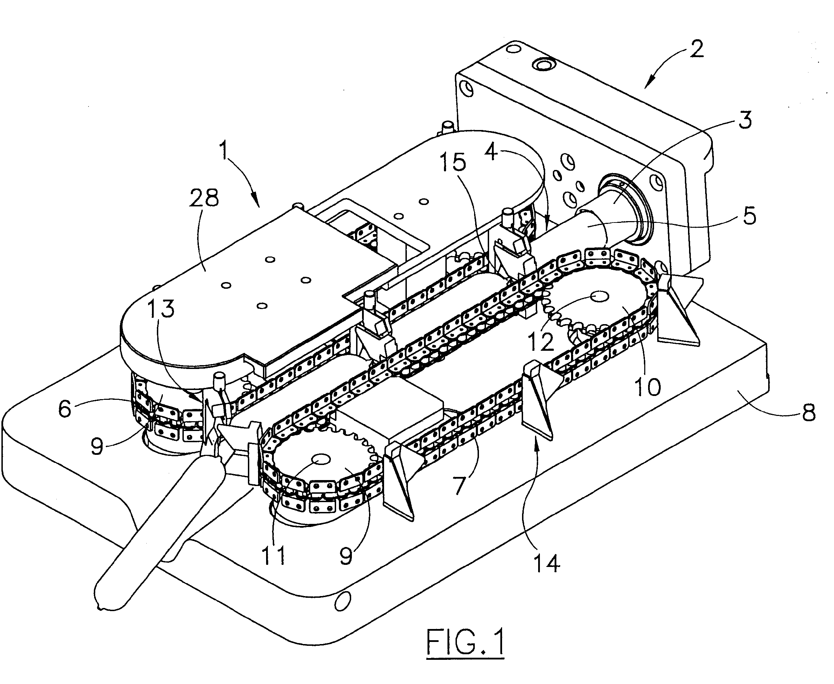

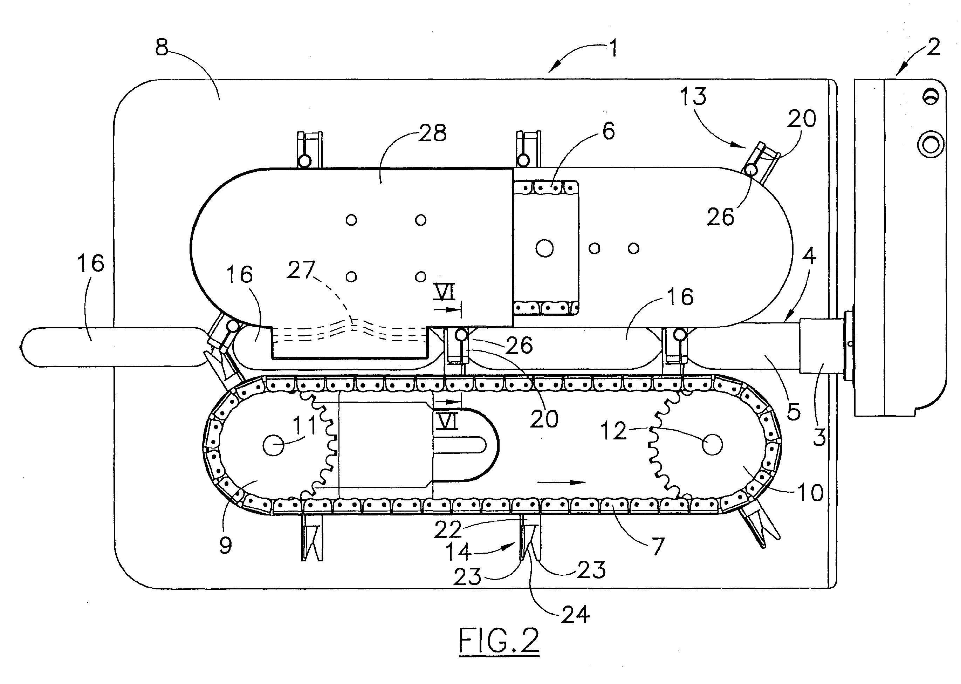

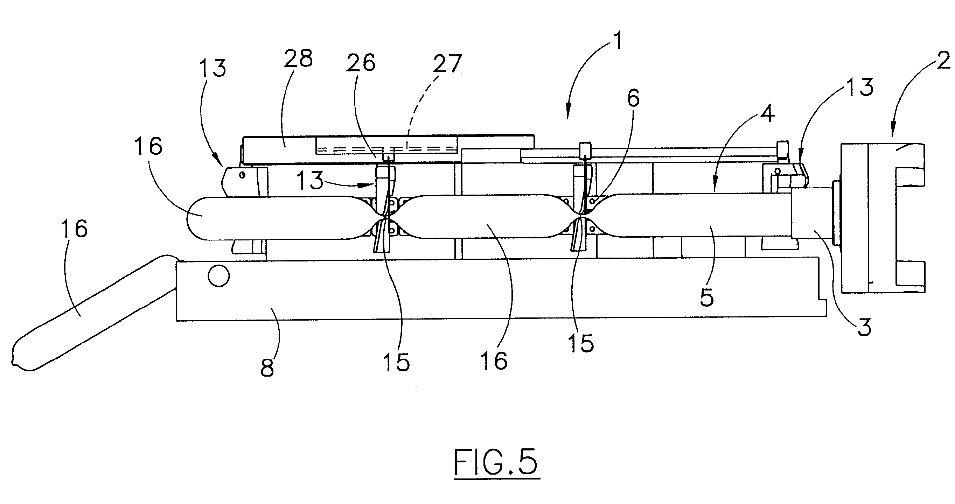

In Figures 1-5 the feeding, separation and cutting device according to the invention, indicated as a whole by the reference number 1, is located at the exit of a filling machine 2, for example of the type described in EP-A-0781509, of which only the terminal part provided with an output mouth 3 for a continuous sausage 4 is shown that is made up of a tubular envelope 5, otherwise called "casing," that is adequately filled with minced meat in correspondence of a stuffing tube (not visible in the drawings) that is housed inside the output mouth 3.

In analogy with what described in EP-A-0868852, the device 1 comprises a pair of closed loop chains 6 and 7, that are positioned on a support plane 8 at both sides of the sausage 4. Each of the two chains 6 and 7 engages with a respective pair of toothed pulleys 9 and 10 that are placed on respective vertical shafts 11 and 12, coordinated to each other in order to impose concordant and uniform feeding movements to the two chains at identical speed under the control of an appropriate motor shaft (not shown).

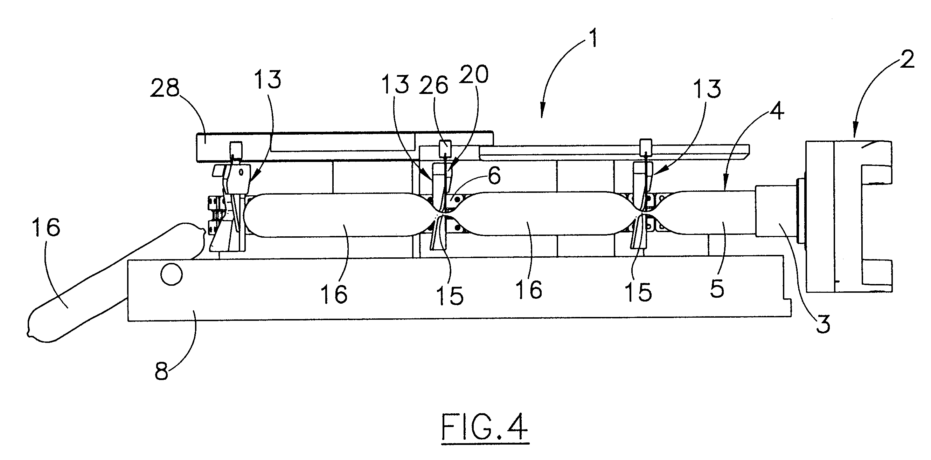

The two chains 6 and 7 are provided with respective sequences of pincers 13 and 14, that in correspondence of the active branches (near to each other) of their looping paths get near to each other two by two and partially penetrate the one in the other (figures 1-3 and 6-9) so as to periodically squeeze the sausage 4 and thus form connection links 15 (figures 4, 5, 8 and 9) between each sausage 16 downstream of the squeezing point and the continuous sausage 4 upstream, the terms "downstream" and "upstream" naturally being understood in the direction of feeding of the sausage.

Yet, as described in EP-A-0868852, immediately after a pair of pincers 13 and 14 has formed a link 15 downstream of the continuous sausage 4 appropriate means ( not shown in the drawings of the present application) control the rotation of the stuffing tube for a pre-established time (shorter than the one necessary to bring the next pair of pincers in position of squeezing) in order to effect the twisting of the casing 5 around the link 15 just formed.

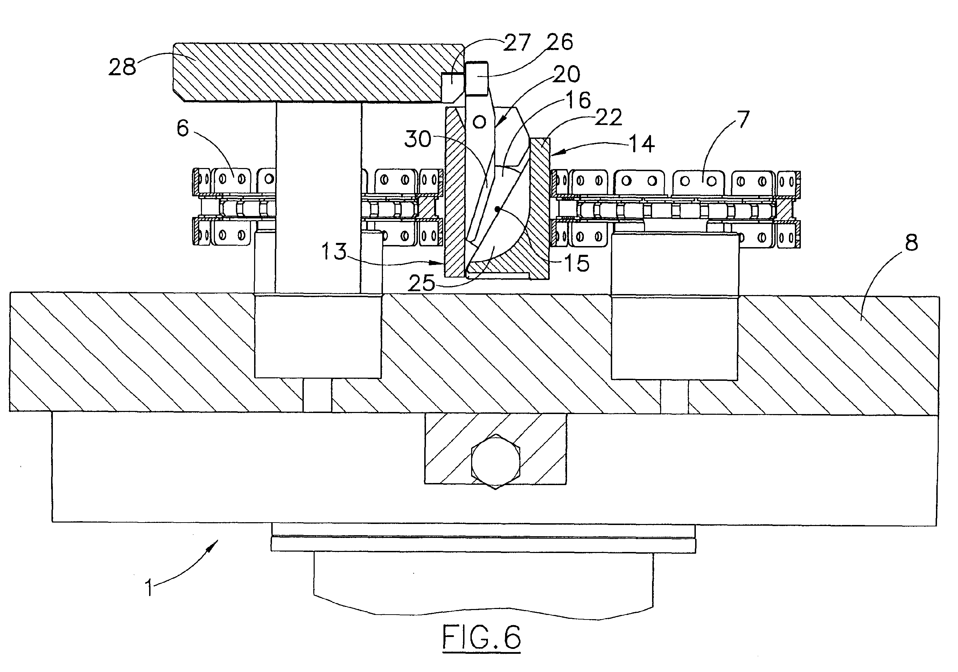

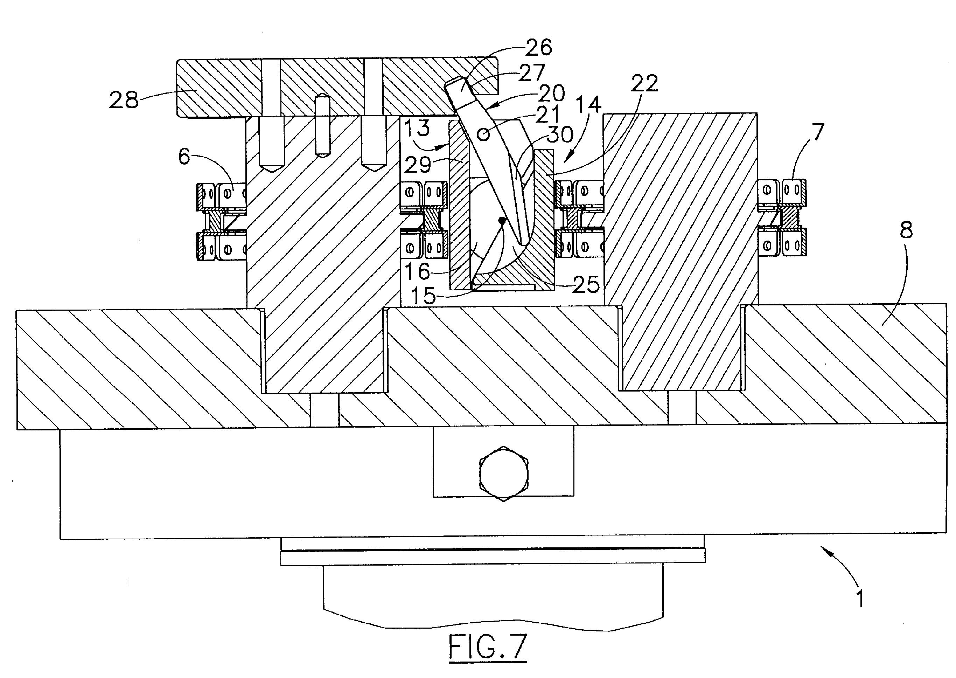

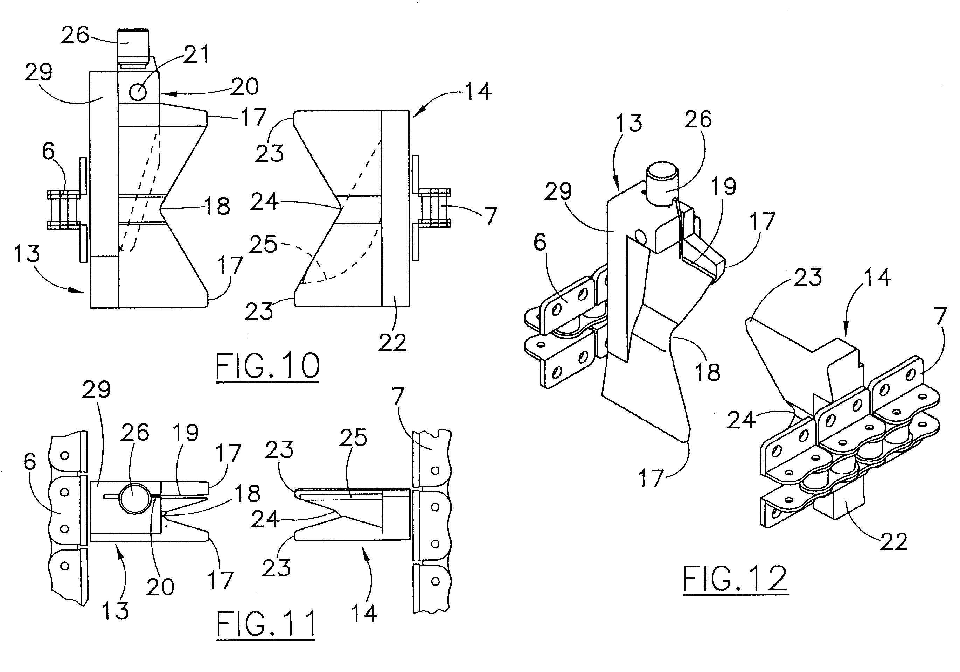

As shown in detail in Figures 6-12, the pincers 13 attached to the chain 6 have substantially the same shape as the ones described in EP-A-0868852, that is they provide for a vertical support 29 attached to the chain 6 and for a pair of horizontal triangular projections 17 between which a groove 18 is defined, but differently from them they also have an intermediate space 19 in which there is housed a cutting blade 20 with cutting edge 30 hinged in 21 on the support 29 and normally maintained in the vertical rest position of Fig. 6 by a plate 28 having functions of cam, with which an upper appendix 26 of the blade 20 is engaged. The pincers 14 attached to the chain 7 have similar shape, that is they provide for a vertical support 22 attached to the chain 7 and a pair of horizontal triangular projections 23 between which a groove 24 is defined, as well as intermediate space 25 that is destined to receive the cutting blade 20 when this is forced to rotate from the rest position of Fig. 6 to the working position of Fig. 7 by the engagement of its upper appendix 26 with a shaped groove 27 that is made in the lower surface of the plate 28 (Figures 1-7).

Because of the structure herein described the feeding, separation and cutting device 1 according to the invention, and more in general the machine for the formation of single sausages made of twisted casing which comprises it, operates as follows.

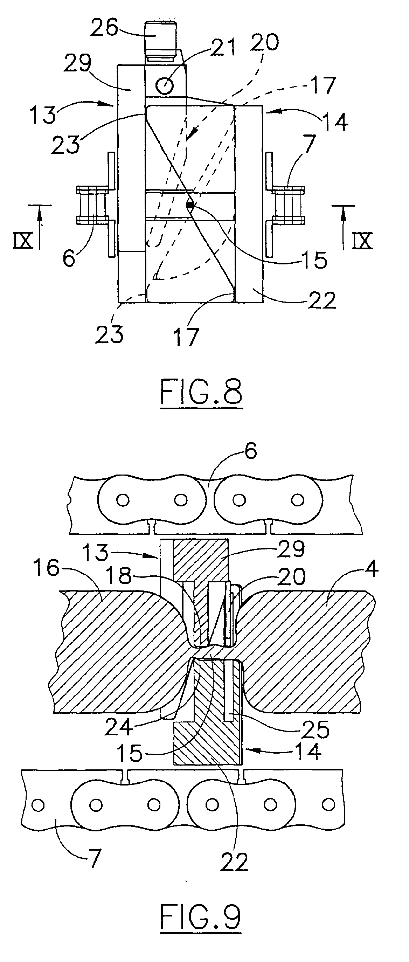

With the chains 6 and 7 in continuous and uniform feed the filling machine 2 feeds a continuous sausage 4 that is subsequently engaged by a first pair of pincers 13-14 (the first one on the right side in Figures 1, 2 and 4) that, by getting near to each other and partially penetrating the one in the other (Figures 8 and 9), squeeze the sausage so as to form a short link 15 between the continuous sausage that is still upstream of the point of squeezing and a thus formed sausage 16 downstream of the same point of squeezing.

When the pincers are closed the rotation of the stuffing tube for a preset time is controlled, in such a way as to cause the twisting of the casing 5 in correspondence of the link just formed.

While the first pair of pincers 13-14 continues its movement dragging with it the continuous sausage and the sausage or sausages already formed and still connected to each other, a second pair of pincers carried out a similar squeezing operation of the sausage and consequent formation of an additional link 15, on which the casing 5 is twisted by means of additional short rotation of the stuffing tube.

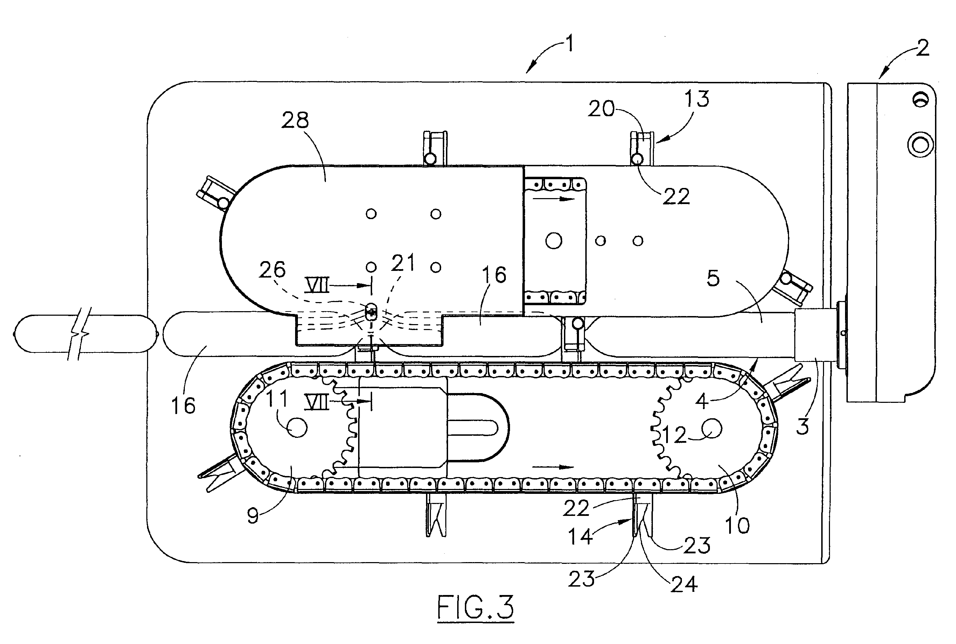

When the first pair of pincers reaches the position, illustrated in Figures 3, 5 and 7, in which the appendix 26 of the cutting blade 20 engages the groove 27, the shape of the groove 27 causes the rotation of the blade 20 toward a position in which the cutting edge 30 of the same blade engages and cuts the link 15 and thus causes the separation of the sausage downstream of the point of cutting from the rest of the string.

Once the engagement with the contoured groove 27 is over, the cutting blade 20 goes back to the rest position and the two pincers that have previously formed the just sheared link move apart from each other by following the diverging path of the respective chains.

In most cases the sole cutting blade 20 associated with the pincers 13 is sufficient to carry out the cutting of the links 15.

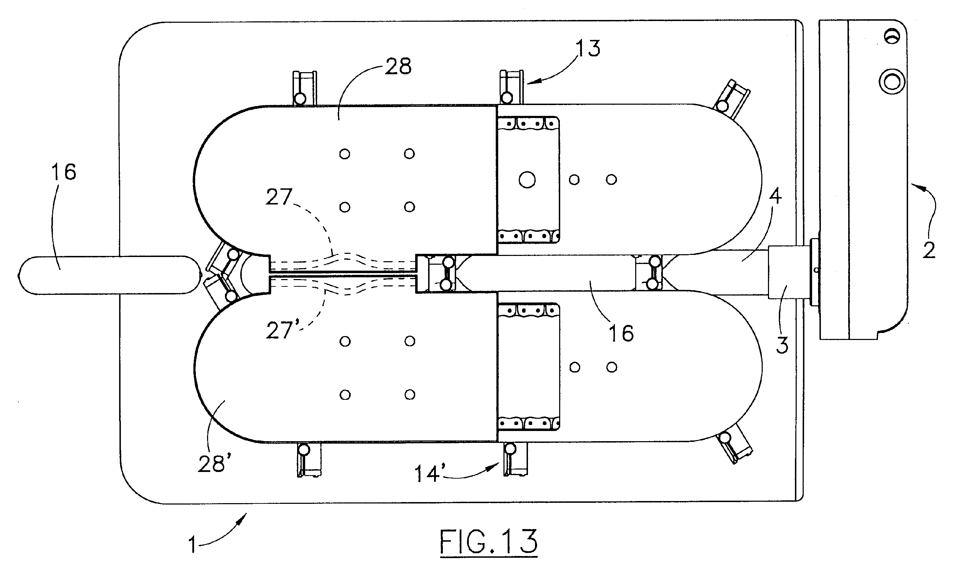

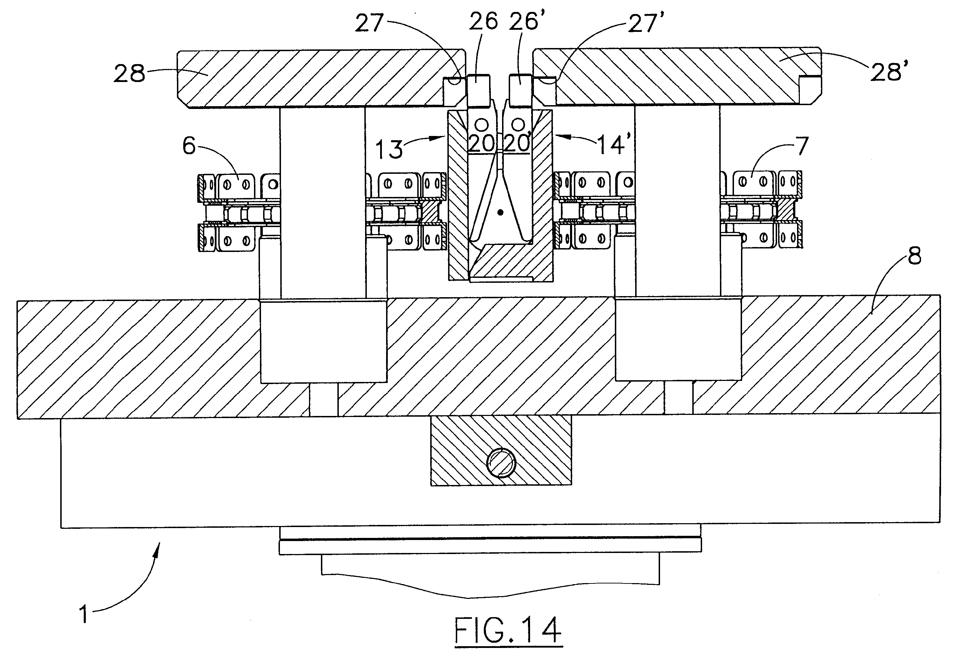

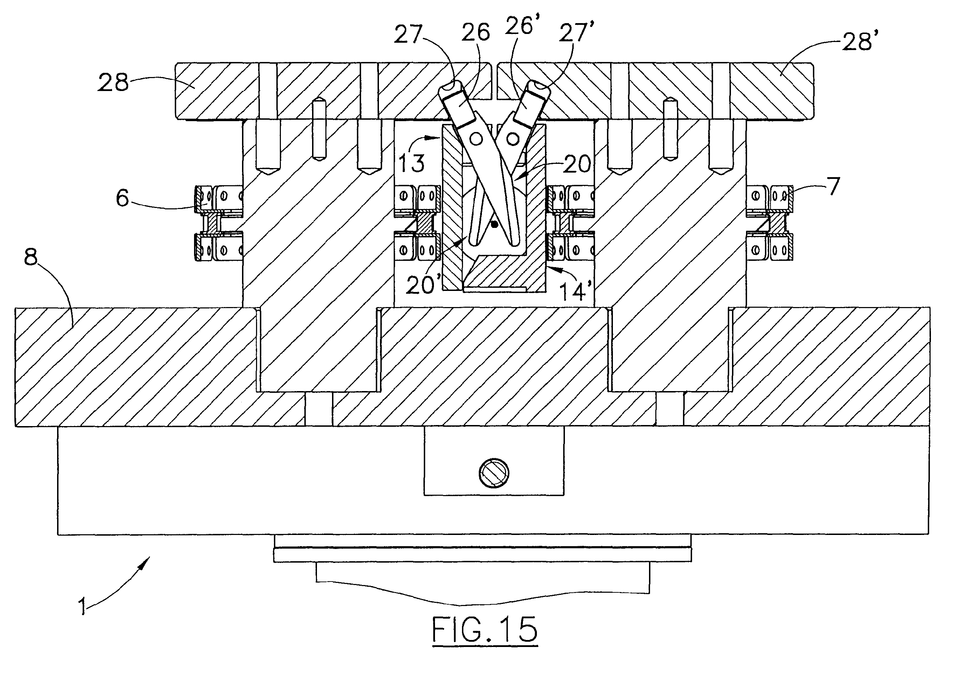

However it is possible that the casing used for the formation of the sausage is particularly resistant. In such case it can be opportune to use the variation of the device according to the invention that is illustrated in Figures 13-15. As it is possible to notice from the aforesaid figures, the device substantially remains the same, except that the pincers 14 are substituted by pincers 14' in all similar to the previous one but provided in addition with a cutting blade 20' identical to the blade 20 of the pincers 13, and also the chain 7 has a plate 28' having the function of a cam, that is equipped with a shaped groove 27' that is symmetrical to the groove 27, in which an appendix 26' of the blade 20' engages.

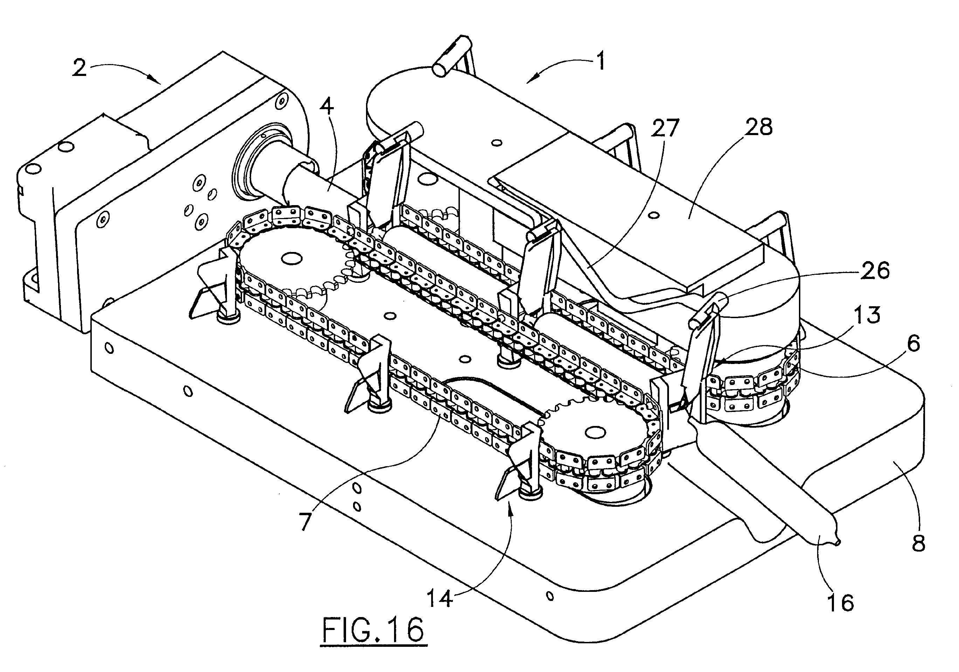

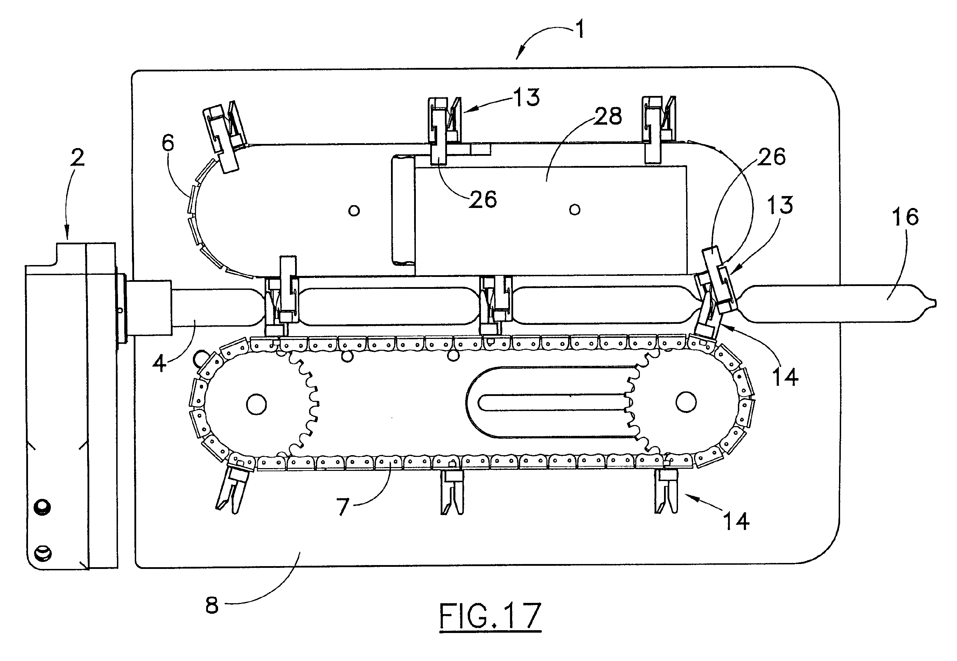

The device of Figures 16-23 is in all similar to the one in Figures 1-12, from which it differs only for slight and not substantial constructive modifications of the pincers 13 and 14 and for a different operating way of the cutting blade 20.

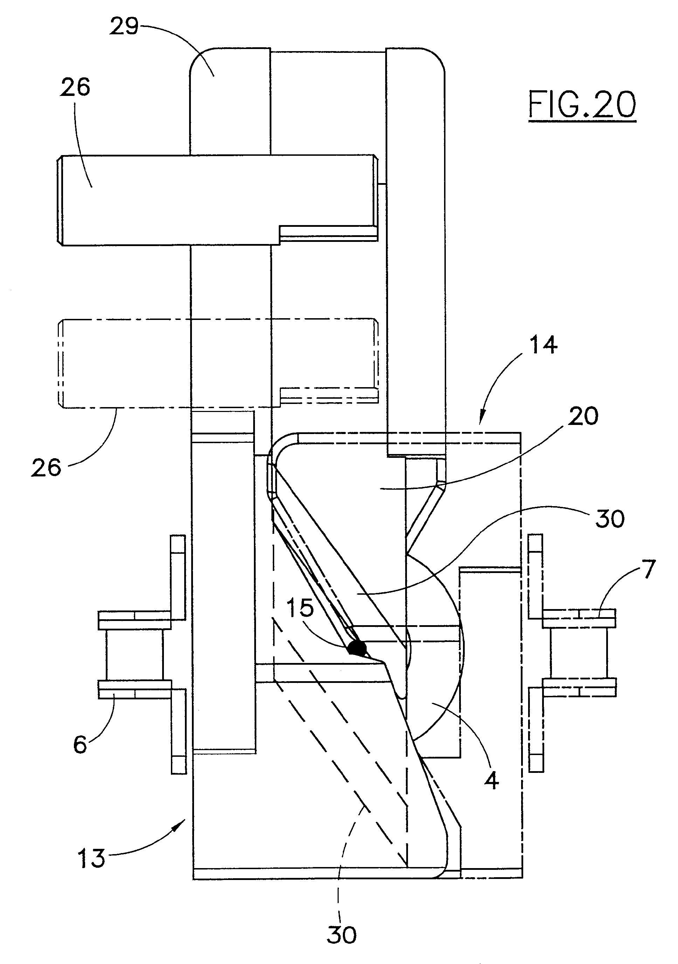

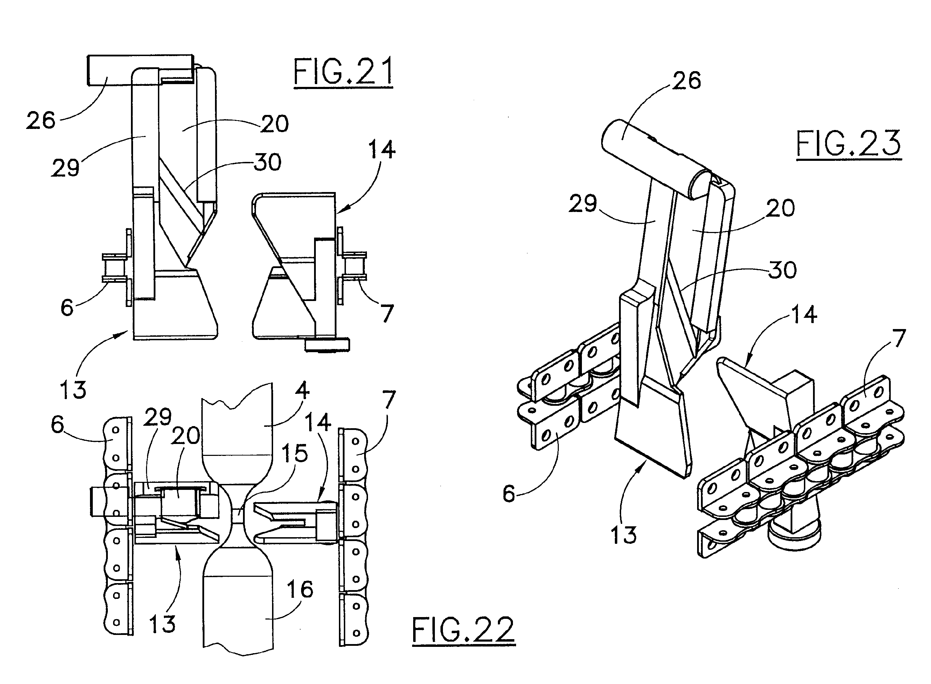

In this case, in fact, the blade 20 is no longer hinged on the support 29 but it is instead vertically sliding along it between the rest position illustrated with a continuous line in Figures 21 and 23 and the cutting position illustrated in line and dots in Figure 20, passing by the intermediary position illustrated in continuous line in Figure 20.

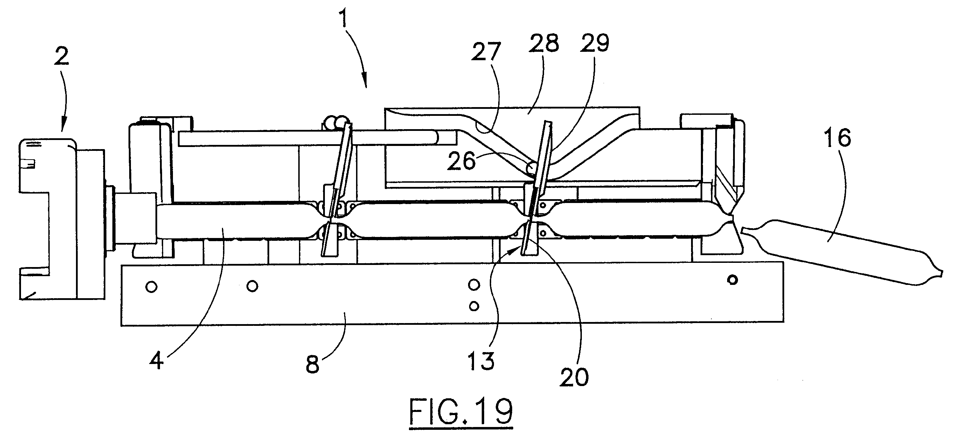

In addition the upper appendix 26 of the cutting blade 20 is engaged in a shaped groove 27 of the covering plate 28, that has a substantially V-shaped development (Figures 16, 18 and 19), in order to force the blade 20 to lower itself in cutting position in a pre-established point of the path of the sausage, when the pincers 13 and 14 are in squeezing position (Figures 19 and 20), to raise again immediately afterwards.

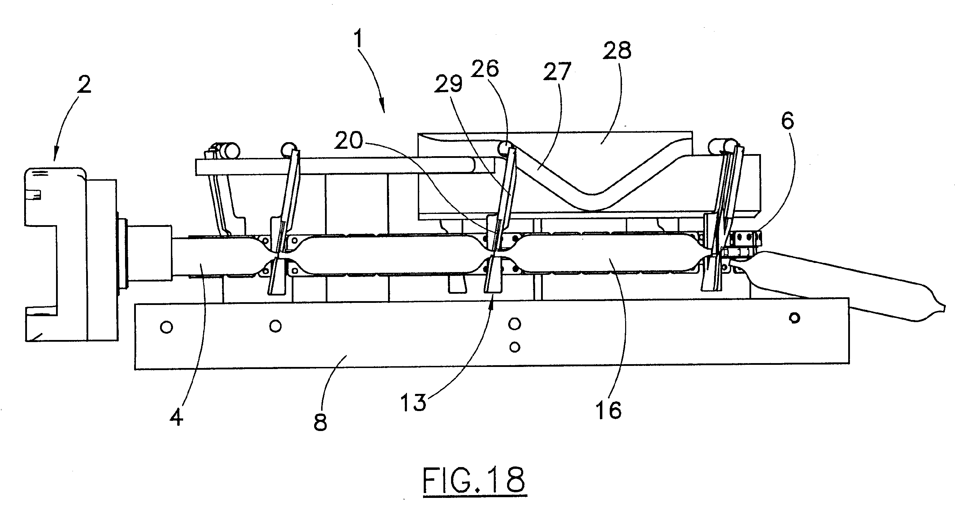

While the pincers 13 and 14 close themselves squeezing the casing 5 in order to form a link 15 between a sausage 16 already formed and the remaining continuous sausage 4 (figure 20), the cutting blade 20 is thus forced to descend from the raised position illustrated in Figures 18, 21 and 23 to the lowered position illustrated in dots and lines in the same Figure 20.

By passing through the intermediate position illustrated in continuous line in Figure 20, the cutting edge 30 of the blade 20 therefore carries out the cutting of the link 15, thus separating the sausage 16 downstream of the point of cutting.

Even in this case the pincers 14 can be substituted by pincers 14' provided with blades of cutting 20' identical and identically operated as regards the blades 20 just described.

## Claims

1. Feeding, separation and cutting device for machine for the manufacture of sausages with twisted casing, comprising means (6, 7) for the feed of a continuous sausage (4) that are provided with at least one pair of cooperating pincers (13, 14, 14') that are arranged on opposite sides of the sausage and approachable to each other so as to squeeze the sausage and thus form a short connection link (15) between each sausage (16) downstream and the rest of the sausage (4) upstream in the direction of feed of the sausage, characterised in that at least one first pincer (13) of said pair of pincers (13, 14, 14') comprises a cutting blade (20) that is controlled so as to move from a rest position to a cutting position when said pincers (13, 14, 14') are in position near to each other for the formation of said connection link (15).

2. Device according to claim 1, characterized in that it comprises cam means (27, 28) that are inserted in the path of the feed of said first pincers (13) and engageable by said cutting blade (20) so as to determine a displacement control of said blade (20) in said cutting position.

3. Device according to claim 2, characterized in that said cam means (27, 28) are made up of a plate (28) that is provided with a shaped groove (27) with which an appendix (26) of said cutting blade (20) is engageable.

4. Device according to claim 1, characterized in that the second pincer (14') too of each pair of pincers is provided with a cutting blade (20') that is controlled so as to move from a rest position to a cutting position simultaneously with the cutting blade (20) of the first pincers (13).

5. Device according to claim 4, characterized in that it comprises cam means (27, 27,' 28, 28') that are inserted in the feed path of said pincers (13, 14') and are engageable by said cutting blades (20, 20') so as to cause a displacement control of said blades (20, 20') to said cutting position.

6. Device according to claim 5, characterized in that said cam means (27, 27,' 28, 28') are made up of plates (28, 28') with symmetrically contoured grooves (27, 27') in which respective appendixes (26, 26') of said cutting blades (20, 20') are engageable.

7. Device according to claim 1, characterized in that said feeding means (6, 7) are made up of chains (6, 7) with continuous uniform motion that extend and run at equal speed along opposite sides of said sausage (4).

8. Device according to any one of the previous claims, characterized in that said cutting blade (20) is hinged onto a support (29) that is fixedly mounted to said first pincers (13) so as to be moved from said rest position to said cutting position by rotation.

9. Device according to any one of the previous claims, characterized in that said cutting blade (20) is slidingly engaged with a support (29) that is fixedly mounted to said first pincers (13) so as to be moved from said rest position to said cutting position by sliding.
